# FASCICULE DE BREVET EUROPEEN

(11) **EP 3 132 168 B1**
(45) Date de publication et mention de la délivrance du brevet: **20.05.2020**
(21) Numéro de dépôt: 15718548.9
(22) Date de dépôt: 07.04.2015
(51) Int. Cl.: F16K 31/524, F02M 26/00, F02D 11/10, F16C 1/00, F16K 1/22, F16K 31/04, F02D 41/00, F16C 19/06, F16C 19/26, F02M 26/54, F02M 26/66

(54) **VANNE À FIXATION AMÉLIORÉE D'UN ROULEMENT DE GUIDAGE D'UN ORGANE DE COMMANDE**
VENTIL MIT VERBESSERTER BEFESTIGUNG EINES LAGERS ZUR FÜHRUNG EINES STEUERELEMENTES
VALVE WITH IMPROVED SECURING OF A BEARING FOR GUIDING A CONTROL MEMBER

(30) Priorité: 08.04.2014 FR 1453084
(43) Date de publication de la demande: 22.02.2017
(73) Titulaire: Valeo Systèmes De Contrôle Moteur, 95800 Cergy Saint Christophe (FR)
(72) Inventeur: RIBERA, Frédéric, F-78260 Acheres (FR); GAUTIER, Sylvain, F-95300 Ennery (FR); JAILLET, Nicolas, F-63122 Ceyrat (FR)
(74) Mandataire: Garcia, Christine
(86) Numéro de dépôt international: PCT/FR2015/050897
(87) Numéro de publication internationale: WO 2015/155463

(56) Documents cités:
- EP-A1- 2 484 925
- EP-A2- 1 096 124
- DE-A1-102007 013 937
- FR-A1- 2 947 027

## Description

L'invention concerne une vanne, notamment une vanne destinée à être mise en œuvre dans le domaine automobile. L'invention vise plus particulièrement une vanne de recirculation des gaz d'échappement, ou vanne EGR, de l'anglais « Exhaust Gas Recirculation ». L'invention se rapporte également à un procédé de fabrication d'une telle vanne.

Dans le domaine automobile, il est connu de mettre en œuvre des vannes comprenant un organe de commande de l'ouverture de la vanne, par exemple une roue à secteur denté, qui tourne à l'encontre d'un ressort de rappel agissant en torsion. Le ressort de rappel permet de rappeler l'organe de commande dans la position déterminée, une fois l'actionnement de l'organe de commande terminé. Le ressort de rappel permet également de maintenir l'organe de commande dans une position déterminée en l'absence d'actionnement, malgré les vibrations auxquelles la vanne peut être soumise.

Une telle vanne peut notamment être du type à papillon. Dans ce cas, la rotation du volet ou papillon peut être directement commandée par la rotation de l'organe de commande. En d'autres termes, le papillon peut être solidaire en rotation de l'organe de commande.

En variante, une telle vanne peut être du type à soupape se déplaçant en translation ou selon un mouvement hélicoïdal, par rapport à un siège de vanne qu'elle obture sélectivement. Dans ce cas, un dispositif est interposé fonctionnellement entre l'organe de commande et la tige de soupape, qui transforme la rotation de l'organe de commande en translation, respectivement en mouvement hélicoïdal, de la tige de soupape.

Il est par exemple connu une vanne EGR de ce type des documents FR-A-2 914 975 ou FR-A-2 947 027, au nom de la Demanderesse. Ces documents décrivent des exemples de vannes de recirculation « EGR » destinées à adapter la quantité de gaz d'échappement réintroduite à l'admission d'un moteur à explosion, pour réduire les émissions polluantes, notamment les émissions d'oxydes d'azote, NOx.

La figure 1 illustre une vanne EGR selon la demande FR-A-2 947 027.

La vanne 100 comporte une soupape 102 qui permet l'introduction et le dosage des gaz d'échappement, dans le conduit d'admission d'un moteur à combustion d'un véhicule automobile. La vanne 100 comporte un moteur électrique 104 engrenant une roue de transmission 106. La roue de transmission 106 engrène un organe de commande 108, ici une roue à secteur denté.

Au moyen d'une came à chemin de came 110, les mouvements de rotation de la roue à secteur denté 108 sont transformés en mouvement de va-et-vient de la soupape 102 par rapport à un siège de vanne. Cependant, la roue à secteur denté 108 est rappelée en position de fermeture de la vanne 100 par un ressort de rappel 112, agissant en torsion.

Ici, la roue à secteur denté 108 est montée rotative par rapport à la came 110 au moyen d'un palier 114, classiquement un roulement à billes. Le palier est reçu dans un logement en creux, formé au sommet de la came 110, délimitée par une paroi latérale de la came. Par suite, les mouvements du palier 114 selon l'axe A de rotation de la roue à secteur denté 108 ne sont pas parfaitement bloqués et du rotulage peut apparaître au sein du palier 114 et donc entre la roue à secteur denté 108 et la came 110. Notamment, quand le palier 114 est un roulement, une bague du roulement peut se déplacer axialement par rapport l'autre bague. Ceci nuit au bon fonctionnement de la vanne.

L'invention a pour but de proposer une vanne EGR, et de manière plus générale, une vanne, notamment une vanne pour véhicule automobile, ne présentant pas les inconvénients susmentionnés. Notamment, l'invention vise à fournir une vanne présentant une fiabilité accrue.

À cet effet, l'invention propose une vanne, notamment une vanne pour véhicule automobile telle qu'une vanne de recirculation des gaz d'échappement, selon la revendication 1.

Ainsi, avantageusement, la bague est retenue dans un logement à trois parois en contact avec la bague. Ceci permet de limiter voire d'éliminer le rotulage du roulement et on assure donc la fiabilité de fonctionnement de la vanne.

Selon des modes de réalisation préférés, la vanne peut présenter une ou plusieurs des caractéristiques suivantes, prises seules ou en combinaison :
- le roulement est un roulement à billes ou à rouleaux ;
- l'organe de commande est solidaire en rotation d'un volet d'obturation d'un passage dans la vanne ;
- l'organe de commande, par exemple une roue à secteur denté, tourne à l'encontre de l'action d'un ressort de rappel agissant en torsion ;
- le ressort de rappel comprend un premier élément de liaison, par exemple un crochet ouvert dans la direction circonférentielle par rapport à la roue à secteur denté, adapté à coopérer avec un deuxième élément de liaison de la roue à secteur denté, par exemple une surface d'appui de la roue à secteur denté, les premier et deuxième éléments de liaison étant conformés pour pouvoir relier ensemble le ressort de rappel et la roue à secteur denté, par rotation de la roue à secteur denté par rapport au ressort de rappel depuis une position où le ressort de rappel et la roue à secteur denté sont fonctionnellement indépendants ;
- la roue à secteur denté comporte, à l'extrémité radialement externe de la surface d'appui, une projection s'étendant dans la direction de l'axe de rotation de la roue à secteur denté et/ou dans une direction orthoradiale par rapport à la roue à secteur denté.

L'invention se rapporte également à un procédé de fabrication d'une vanne telle que décrite ci-avant dans toutes ses combinaisons, comprenant les étapes consistant à :
a) assembler le roulement le logement prévu à cet effet dans le bâti fixe,
b) rabattre sur les secteurs angulaires la paroi latérale du logement sur une bague du roulement, par exemple par galetage, pour limiter avec le fond du logement, les mouvements de ladite bague selon l'axe de de rotation de l'organe de commande.

De préférence, l'organe de commande est une roue à secteur denté, comprenant au moins un renfoncement radial, de préférence au moins deux renfoncements radiaux, de préférence encore deux renfoncements radiaux symétriques, et :
- à l'étape a), la roue à secteur denté est également assemblée avec le bâti fixe et le roulement, et
- à l'étape b), on rabat la paroi latérale sur le ou les secteurs angulaires accessibles à travers le ou les renfoncements radiaux de la roue à secteur denté, au cours de rotations de la roue à secteur denté, le cas échéant.

L'invention sera mieux comprise à la lumière de la description qui va suivre, description faite en référence aux dessins annexés, parmi lesquels :

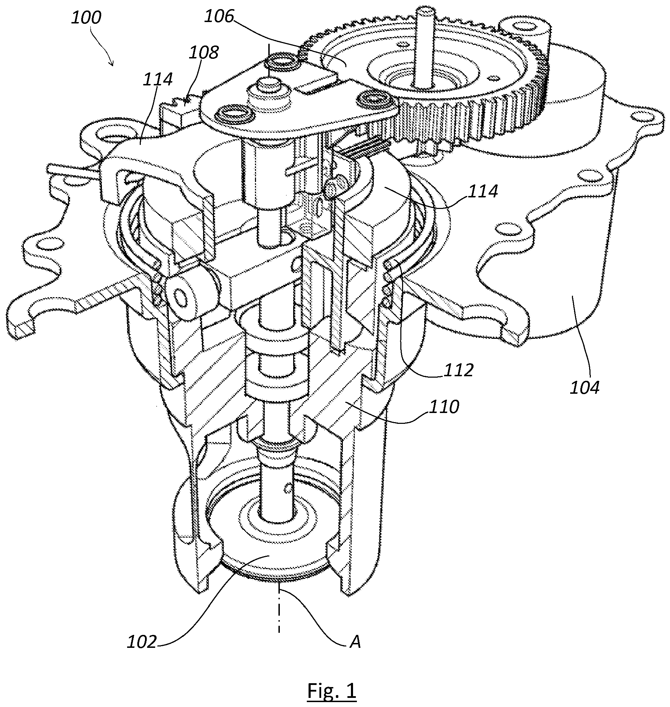

- la figure 1 représente en perspective, une vue partiellement arrachée d'une vanne EGR selon l'état de la technique ;
- les figures 2 et 3 représentent schématiquement en perspective, un dispositif de transformation de mouvements pour une vanne EGR, respectivement en vue éclatée et assemblé ;
- les figures 4 et 5 représentent selon des perspectives différentes, un détail du dispositif de transformation de mouvements de la figure 3 ;
- la figure 6 représente schématiquement en coupe, un détail du dispositif de transformation de mouvements des figures 2 et 3 ;
- les figures 7 et 8 représentent un détail de la figure 6 qui illustre un procédé de fabrication d'une vanne EGR comprenant le dispositif de transformation de mouvements des figures 2 et 3.

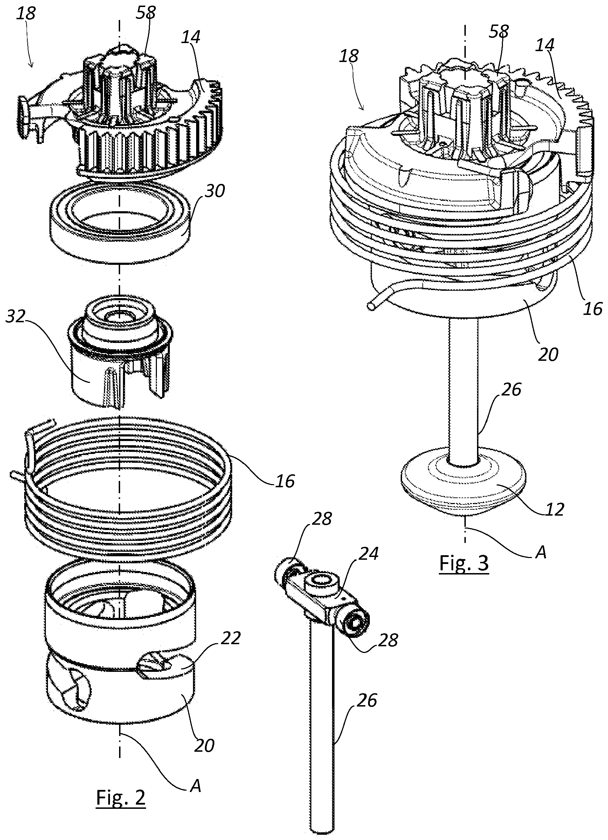

Dans la suite, on décrit une vanne, par exemple une vanne EGR pour véhicule automobile, dont une partie seulement est illustrée aux figures 2 et 3.

Cette vanne comporte une soupape 12 qui permet l'introduction et le dosage d'un fluide, ici les gaz d'échappement, dans une canalisation, ici l'admission. La vanne est du type comprenant un organe de commande 14 tournant à l'encontre d'un ressort de rappel 16 agissant en torsion.

La vanne comporte tout d'abord un corps de vanne formant un conduit pour les gaz d'échappement à faire recirculer. Le corps de vanne peut également former un conduit pour une circulation d'eau de refroidissement de la vanne. Le corps peut présenter des trous de fixation de la vanne à un bloc motopropulseur d'un véhicule automobile. De tels trous de fixation peuvent notamment être réalisés dans des collerettes entourant les débouchés du conduit de circulation d'eau de refroidissement permettant ainsi d'intégrer le conduit de circulation d'eau de refroidissement de la vanne dans le conduit de circulation d'eau de refroidissement du moteur sur laquelle la vanne est fixée. De tels trous de fixation peuvent également être réalisés dans des collerettes entourant les débouchés d'un conduit de recirculation de gaz d'échappement.

La vanne comporte également un moteur qui peut être monté dans un logement formé par le corps de vanne. Le moteur engrène une roue de transmission. La roue de transmission engrène à son tour l'organe de commande 14, ici une roue à secteur denté. Le moteur est ainsi adapté à entraîner en rotation la roue à secteur denté 14.

Le mouvement de rotation de la roue à secteur denté 14 est transformé en mouvement de va-et-vient de la soupape 12 grâce à un dispositif de transformation de mouvements 18. Par mouvement de va-et-vient, on entend ici un mouvement comprenant une translation selon un axe, éventuellement combinée à une rotation par rapport à ce même axe.

Le dispositif de transformation de mouvements 18 comporte à cet effet, à l'intérieur d'un organe support formé par le corps de vanne, une came 20 à chemin de came 22 (ou came cylindrique), un barreau 24 (ou attelage) coopérant avec le chemin de came 22 de la came cylindrique 20, le barreau 24 étant fixé à l'extrémité d'une tige 26 solidaire de la soupape 12. Pour guider la tige 26 dans le corps de vanne, il peut être prévu un ou plusieurs paliers entre la tige 26 et le corps de vanne. Il peut être prévu un jeu entre la tige 26 et le barreau 24 pour permettre une rotation de la tige par rapport au barreau, autour de l'axe de la tige, le barreau et la tige étant solidaire en translation selon la direction de l'axe de la tige.

Le chemin de came 22 est ici formé de deux pistes identiques, de part et d'autre d'une paroi tubulaire de la came cylindrique 20. Le barreau 24 est muni à chacune de ses extrémités d'un galet 28 coopérant avec le chemin de came de sorte que, lorsque la roue à secteur denté 14 est entraînée en rotation, celle-ci entraîne à son tour le barreau 24 en rotation provoquant, grâce au parcours des galets 28 dans le chemin de came 22, la translation, ou tout du moins le va-et-vient, de la soupape 12. La soupape 12, la tige 26 et le barreau 24 sont fixes les uns par rapport à aux autres et forment un ensemble dont le déplacement dans la direction de l'axe A de déplacement de la soupape 12 répond à la rotation de la roue à secteur denté 14 autour de ce même axe A.

Entre la roue à secteur denté 14 et la came cylindrique 20, il est disposé un roulement 30, ici un roulement à billes, pour permettre la rotation de la roue à secteur denté 14 par rapport à la came cylindrique 20.

Par ailleurs, la roue à secteur denté 14 est solidaire en rotation d'une jupe 32 prévue pour coopérer avec le barreau 24. Cette jupe 32 comporte deux parois longitudinales symétriques et s'étendant essentiellement parallèlement à la direction A de rotation de la roue à secteur denté 14 et de translation de la soupape 12. Les deux parois longitudinales définissent entre elles un logement pour le barreau 24. Ainsi, le barreau 24 est disposé dans le logement de sorte que la roue à secteur denté 14 soit apte à entraîner en rotation le barreau 24 par l'intermédiaire des parois longitudinales de la jupe 32, et que le barreau 24 soit libre de coulisser dans le logement dans la direction de translation de la soupape 12.

Par conséquent, au sein de la vanne, la rotation de la roue à secteur denté 14 entraîne la rotation du barreau 24 dont les galets 28 roulent alors sur le chemin de came 22 de la came cylindrique 20, fixe, ce qui entraîne conjointement un mouvement de la soupape 12 dans la direction de l'axe A, de déplacement de la soupape 12 et de rotation de la roue à secteur denté 14, entre une position de la soupape 12 correspondant à une fermeture de la vanne et au moins une position de la soupape correspondant à une ouverture de vanne, étant entendu qu'à chaque position de la soupape 12 correspond une unique position angulaire distincte de la roue à secteur denté 14.

Pour rappeler la soupape 12 en position de fermeture de la vanne, et/ou la maintenir dans cette position en l'absence d'actionnement par le moteur, la roue à secteur denté 14 est reliée à l'organe de support au moyen d'un ressort de rappel 16 agissant en torsion. Ainsi, l'ouverture de la vanne 10 est commandée par la rotation de la roue à secteur denté 14, organe de commande, elle-même provoquée par la rotation du moteur, organe d'actionnement, à l'encontre d'une force de rappel exercée sur la roue à secteur denté 14 par le ressort de rappel 16.

Le ressort de rappel 16 est ici un ressort hélicoïdal d'axe A correspondant à l'axe de rotation de la roue à secteur denté 14. Le ressort de rappel 16 est relié, à une extrémité, à l'organe de support et, à l'autre extrémité, à la roue à secteur denté 14, de telle sorte de la rotation de la roue à secteur denté 14 commandant l'ouverture de la vanne provoque une torsion du ressort de rappel 16. En particulier, le ressort de rappel 16 peut être relié à l'organe support du fait qu'une de ses extrémités, pliée dans le sens opposé du reste de l'enroulement hélicoïdal du ressort de rappel 16, est reçue dans un trou dans l'organe de support ou coopère avec une butée formée à cet effet par le ressort de rappel 16. Le ressort de rappel 16 est ici reçu dans un logement sensiblement cylindrique délimité par l'organe de support, la came cylindrique 22 et la roue à secteur denté 14.

Le moteur coupé, le ressort de rappel 16 exerce un effort de rappel rappelant la roue à secteur denté 14 dans sa position correspondant à la position de fermeture de la vanne. Cette position de la roue à secteur denté 14 correspondant à la fermeture de la vanne peut correspondre à un état précontraint du ressort de rappel 16. En d'autres termes, dans la position de la roue à secteur denté 14 correspondant à la fermeture de la vanne, le ressort de rappel 16 exerce un effort sur la roue à secteur denté 14 tendant à la faire tourner. Cependant, la rotation de la roue à secteur denté 14 au-delà de la position correspondant à la fermeture de la vanne est empêchée du fait que la soupape 12 est en buté contre un siège de vanne.

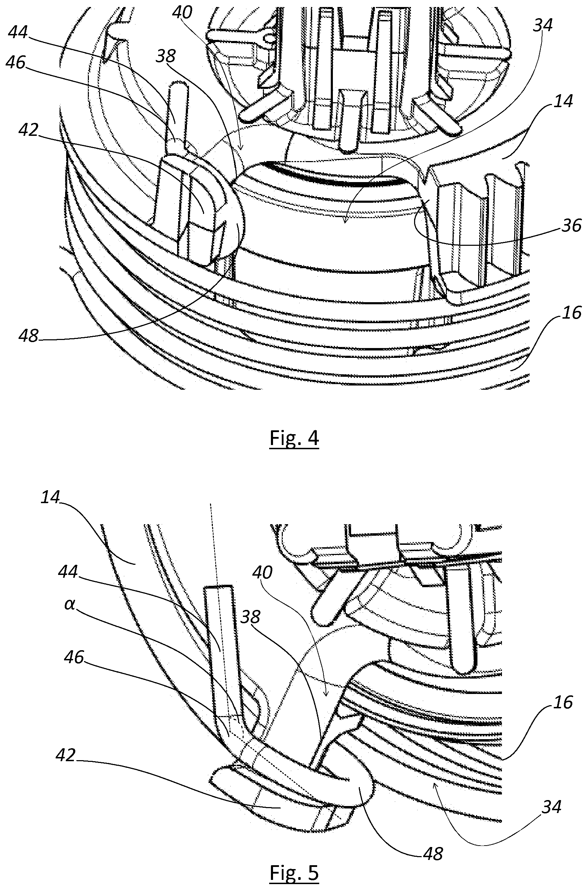

On va maintenant décrire plus spécifiquement comment le ressort de rappel 16 est relié à la roue à secteur denté 14, en regard des figures 4 et 5.

Il est à noter, tout d'abord, que l'axe A de rotation de la roue à secteur denté 14 permet de définir, pour tout point considéré de la roue à secteur denté ou du dispositif de transformation de mouvements 18 :
- une direction radiale qui s'étend depuis l'axe A de rotation de la roue à secteur denté 14, vers le point considéré, dans le plan normal à l'axe A de la roue à secteur denté 14 comprenant le point considéré ; et
- une direction orthoradiale, perpendiculaire à la direction radiale et s'étendant dans le plan normal à l'axe A de rotation de la roue à secteur denté 14 comprenant le point considéré.

Comme cela est plus particulièrement visible sur la figure 4, la roue à secteur denté 14 comporte un renfoncement radial 34. En d'autres termes, sur un secteur angulaire défini, la roue à secteur denté 14 présente un rayon inférieur à un autre secteur angulaire défini, notamment au secteur angulaire sur lequel sont formées les dents d'engrènement du secteur denté.

Le renfoncement radial 34 s'étend entre deux bords sensiblement radiaux 36, 38. En l'espèce, le premier bord radial 36 délimite le secteur denté de la roue à secteur denté 14.

Le deuxième bord radial 38 est formé au niveau d'une zone arrondie 40 de la roue à secteur denté 14 (ou surface d'appui). L'arrondi du deuxième bord radial 38 est essentiellement défini par rapport à un axe radial par rapport à la roue à secteur denté 14.

À l'extrémité radialement externe du deuxième bord radial 38, la roue à secteur denté 14 comporte une projection 42. La projection 42 s'étend ici à la fois selon la direction de l'axe A de rotation de la roue à secteur denté 14 et dans une direction orthoradiale. En d'autres termes, la projection 42 forme un bourrelet (ou aileron) à l'extrémité radialement externe du deuxième bord radial 38. La projection fait en effet saillie par rapport à la surface d'appui 40, à la fois :
- dans la direction de l'axe A de rotation de la roue à secteur denté, et
- dans la direction orthoradiale.

En d'autres termes encore, la projection 42 s'étend :
- en-dessus et/ou en-dessous (dans la direction de l'axe A de rotation de la roue à secteur denté 14) de la surface d'appui 40 ; et
- en saillie dans le renfoncement radial 34, dans la direction orthoradiale, par rapport à la surface d'appui 40.

Cependant, l'extrémité 44 du ressort de rappel 16, destinée à coopérer avec la roue à secteur denté 14, s'étend radialement vers l'intérieur du ressort de rappel 16. Pour ce faire, le ressort de rappel 16 présente un coude 46 au niveau duquel le ressort de rappel 16 est plié ou courbé autour d'un axe parallèle à l'axe A de rotation de la roue à secteur denté 14. Le coude 46 forme de préférence, dans un plan normal à l'axe A de rotation de la roue à secteur denté, un angle α de 120° ou moins.

En outre, entre le coude 46 et l'enroulement hélicoïdal du ressort de rappel 16, ce dernier présente un crochet 48. Le crochet 48 est ouvert dans la direction circonférentielle de la roue à secteur denté 14. Ici, ce crochet 48 est réalisé par une portion du ressort de rappel 16 qui est courbée autour d'un axe radial par rapport à la roue à secteur denté 14 (ou le ressort de rappel 16). Le crochet 48 est ainsi semblable à un anneau droit sur le côté du ressort de rappel 16. De préférence, le crochet 48 est réalisé par une portion du ressort de rappel 16 telle que le coude 46 est situé, le long du ressort de rappel 16, entre le crochet 48 et l'extrémité 44 du ressort de rappel 16 qui est la plus proche du crochet.

Ici, la courbure (c'est-à-dire l'inverse du rayon de courbure) de la portion du ressort de rappel 16 formant le crochet 48 peut être inférieure à la courbure de la zone d'appui 40, au niveau du deuxième bord radial 38, les deux courbures étant mesurées autour d'un axe sensiblement radial par rapport à la roue à secteur denté 14. Ceci permet en effet une insertion facilitée de la roue à secteur denté 14 dans l'ouverture du crochet 48. Cependant, en variante, la courbure du crochet 48 peut, initialement, être supérieure ou égale à la courbure de la zone d'appui pour obtenir un effet de clippage du ressort de rappel 16 sur la roue à secteur denté 14.

Ainsi, le crochet 48 et la roue à secteur denté 14, notamment la zone d'appui 40, sont conformés pour pouvoir relier ensemble le ressort de rappel 16 et la roue à secteur denté 14, par rotation de la roue à secteur denté 14 par rapport au ressort de rappel 16, de préférence d'un angle au moins égal à 20°, de préférence encore au moins égal à 25°, depuis une position où le ressort de rappel 16 et la roue à secteur denté 14 sont fonctionnellement indépendants. Par fonctionnellement indépendants, on entend que le ressort de rappel n'exerce pas d'effort de rappel en torsion sur la roue à secteur denté 14. En d'autres termes, depuis une position où le ressort n'exerce pas d'effort de rappel en torsion sur la roue à secteur denté 14, on réalise la mise en fonction du ressort de rappel 16 par simple rotation de la roue à secteur denté 14. Le montage du ressort de rappel 16 s'en trouve facilité.

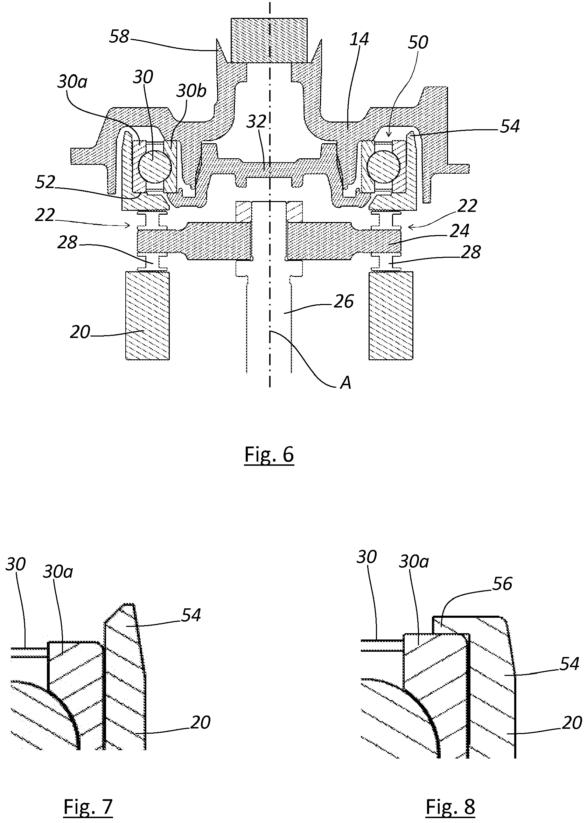

Par ailleurs, comme illustré aux figures 6 à 8, la came 20 forme à son extrémité orientée vers la roue à secteur denté 14, un logement 50 de réception du roulement 30. Le roulement 30 comporte deux bagues 30a, 30b coaxiale, libres en rotation l'une par rapport à l'autre grâce à des billes ou des rouleaux. Le logement 50 présente un fond 52 sur lequel repose la bague radialement externe 30a du roulement 30 et une paroi latérale 54, s'étendant selon l'axe A de rotation de la roue à secteur denté 14 et serrant la bague radialement externe 30a du roulement 30, de sorte que le roulement 30 est monté serré dans le logement 50. La bague radialement interne 30b du roulement 30 est par ailleurs enserré entre la roue à secteur denté 14 et la jupe 32 dont elle est solidaire.

Initialement, comme cela est représenté aux figures 6 et 7, la paroi latérale 54 s'étend au-dessus, le long de l'axe A de la roue à secteur denté 14, du roulement 30. Cependant, l'extrémité de la paroi latérale 54 est repliée sur au moins deux secteurs angulaires disjoints symétriques de la paroi latérale 54. Les bords rabattus 56 de la paroi latérale 54 ainsi formés limitent voire empêchent ainsi, en coopération avec le fond 52 du logement 50 de réception du roulement 30, les mouvements de la bague radialement externe 30a du roulement 30, selon l'axe A de rotation de la roue à secteur denté 14. Par mouvements de la bague radialement externe 30a selon l'axe A de rotation de la roue à secteur denté 14, on entend ici essentiellement les translations selon cet axe de cette bague radialement externe 30a. Bien entendu, la rotation relative des bagues du roulement 30 autour de l'axe A de rotation de la roue à secteur denté 14 est laissée libre par les bords rabattus 56.

De manière plus précise, ici, la paroi latérale 54 est rabattue sur deux secteurs angulaires disjoints, symétriques par rapport au centre de la roue à secteur denté 14. La symétrie des bords rabattus 56 de la paroi latérale 54 permet une homogénéité de la fixation du roulement 30, permettant d'assurer la fiabilité de la fixation de ce roulement 30.

Pour réaliser les bords rabattus de la paroi latérale 54, on peut tout d'abord assembler le roulement 30 dans le logement 50 prévu à cet effet dans la came 20, puis rabattre les secteurs angulaires de la paroi latérale 54 du logement 50, par exemple par galetage, pour que le ou les bords rabattus limitent avec le fond 52 du logement 50 de réception du roulement 30, les mouvements de la bague radialement externe 30a selon l'axe A de rotation de la roue à secteur denté 14.

Cependant, de préférence, on commence par assembler ensemble la roue à secteur denté 14, la jupe 32, le roulement 30, l'attelage comprenant le barreau 24 et les galets 28, la tige de soupape 26, la came 20 et le ressort de rappel 16 pour arriver à la configuration de la figure 6 où la paroi latérale 54 du logement 50 n'est pas rabattue. L'ensemble peut être monté dans le corps de vanne de la vanne, notamment par vissage de la came dans un logement prévu à cet effet dans le corps de vanne.

À partir de cette configuration, on utilise un outil, de galetage par exemple, qui saisit une tête carrée 58 de la roue à secteur denté 14. L'outil peut alors provoquer la rotation de la roue à secteur denté 14 par rapport à la came 20. L'outil traverse les renfoncements, notamment du renfoncement 34, dans la roue à secteur denté 14, pour déformer la portion de la paroi latérale 54 accessible à l'outils à travers ces renfoncements, éventuellement également durant la rotation de la roue à secteur denté 14. La rotation de la roue à secteur denté peut alors être commandée par l'outil de galetage lui-même.

La déformation réalisée par l'outil peut être faible, de sorte que plusieurs passages de l'outil sont nécessaires pour former des bords rabattus 56 aptes à enserrer le palier 30 contre le fond 52 du logement 50. En réalisant ainsi plusieurs passages de l'outil et en limitant à chaque passage la déformation de la paroi latérale 54, on limite les efforts nécessaires. En outre, on limite les risques de casse de la paroi latérale.

L'assemblage de la roue à secteur denté 14, de la jupe 32, du roulement 30, de l'attelage comprenant le barreau 24 et les galets 28, de la tige de soupape 26 et de la came 20 peut être réalisé de manière aisée, comme décrit ci-après.

Dans un premier temps, on assemble les différents éléments constituant le dispositif de transformation de mouvements 18. Notamment, on dispose le ressort de rappel 16 de telle sorte que l'ouverture du crochet 48 soit sensiblement en vis-à-vis de la zone d'appui 40. Ici, si le rayon initial du ressort de rappel 16, avant qu'il ne soit contraint en torsion, est sensiblement supérieur au rayon de la roue à secteur denté 14, au niveau du deuxième bord latéral 38, il est possible de positionner l'ouverture du crochet 48, orientée vers le deuxième bord latéral 38, une partie au moins de l'extrémité 44 du ressort de rappel 16 étant reçue au droit (dans la direction de l'axe A de rotation de la roue à secteur denté 14) du renfoncement radial 34. Ceci est réalisé ici du fait que l'extrémité 34 s'étend radialement vers l'intérieur par rapport à l'enroulement hélicoïdal du ressort de rappel 16.

Par ailleurs, on s'assure à cette étape que les nervures 50, 52 sont reçues radialement à l'intérieur du ressort de rappel 16, le ressort de rappel 16 étant en appui sur les surfaces hélicoïdales 64, 66 des rampes 60, 62 de la roue à secteur denté 14.

Il est à noter ici que l'assemblage des différents éléments constituant le dispositif de transformation de mouvements 18 peut être réalisé de sorte que le crochet 48 du ressort de rappel 16 ne soit pas, dans un premier temps, reçu au droit du renfoncement radial 34. Le crochet peut notamment être reçu sous la roue à secteur denté 14. Il convient alors de faire tourner la roue à secteur denté 14, dans la direction opposée à la direction de la force de rappel du ressort de rappel pour se ramener à la configuration de la figure 6. La rotation de la roue à secteur denté 14 peut être réalisée à l'aide du moteur d'actionnement de la vanne ou, de préférence, par un moteur externe à la vanne sur la chaîne de montage.

Puis, on fait tourner la roue à secteur denté 14. Ici, du fait que l'extrémité 44 du ressort de rappel 16 s'étend radialement vers l'intérieur de l'enroulement hélicoïdal du ressort de rappel 16, cette extrémité 44 peut coopérer avec l'aileron 42 pour guider l'extrémité 44 du ressort de rappel 16 et le crochet 48, radialement vers l'intérieur de la roue à secteur denté 14 au fur et à mesure de la rotation de la roue à secteur denté 14.

En continuant à faire tourner la roue à secteur denté 14, on arrive à une configuration où le crochet 48 est en appui sur la zone d'appui 40. Ainsi, la position de l'extrémité 44 du ressort de rappel 16 et, de manière plus générale, la liaison du ressort de rappel 16 avec la roue à secteur denté 14 sont assurée : le ressort de rappel 16 peut dans cette position exercer un effort de rappel sur la roue à secteur denté 14. De plus, dans cette position, l'aileron 42 est également en contact, radialement à l'intérieur, avec le crochet 48. Le crochet 48 ne peut ainsi pas se déplacer radialement par rapport à la roue à secteur denté 14. Ainsi, l'aileron 42 évite tout risque d'échappement du ressort de rappel 16.

En continuant encore la rotation de la roue à secteur denté, on contraint le ressort de rappel 16 en torsion. Le diamètre du ressort de rappel 16 est diminué, par exemple jusqu'à ce que le ressort de rappel vienne en appui sur la surface radialement externe des nervures 50, 52 de la roue à secteur denté 14, ce qui assure le guidage du ressort de rappel 16 au cours de ses torsions ultérieures.

Bien entendu, la présente invention ne se limite pas à la description ci-dessus. De nombreuses variantes de réalisation sont accessibles à l'homme de l'art, dans le cadre de l'invention définie par le jeu de revendications ci-joint.

En particulier, pour améliorer encore la liaison du ressort de rappel 16 avec la roue à secteur denté 14 ou en variante à l'aileron 42, il peut être prévu une rainure de réception de l'extrémité 44 dans la roue à secteur denté 14.

L'extrémité 44 du ressort de rappel 16 peut ne pas s'étendre radialement vers l'intérieur, même si cette solution présente l'avantage de limiter l'encombrement de la vanne 10, le ressort de rappel 16 ne faisant par saillie radialement par rapport à la roue à secteur denté 14. La présence d'un coude 46 est en tout état de cause préférée pour assurer une bonne stabilité de la liaison entre le ressort de rappel 16 et la roue à secteur denté 14.

Également, le diamètre du ressort de rappel 16 peut, avant la liaison du ressort de rappel 16 avec la roue à secteur denté 14, être inférieur au diamètre de la roue à secteur denté 14 au niveau du deuxième bord latéral 38. Le crochet 48 peut ainsi être reçu dans le renfoncement radial 34 de la roue à secteur denté 14. L'ouverture du crochet 48 peut alors être disposée en vis-à-vis de la surface d'appui 40.

La zone d'appui est ici formée au niveau d'un bord latéral radial d'un renfoncement radial dans la roue à secteur denté. Cependant, de nombreuses variantes de zone d'appui peuvent être imaginées par l'homme du métier.

Le crochet 48, également, qui est ici formé par une portion courbée du ressort de rappel 16, peut prendre de nombreuses autres formes. Il peut ainsi, par exemple, être réalisé par pliage, notamment. Dans ce cas, le crochet 48 présente au moins un angle.

Il peut également être imaginé de remplacer le crochet du ressort de rappel et la surface d'appui de la roue à secteur denté par d'autres premier et deuxième éléments de liaison. Par exemple, les premier et deuxième éléments de liaison peuvent être des aimants fixés respectivement au ressort de rappel et à la roue à secteur denté. On peut également imaginer que le ressort comporte un brin radial qui coopère avec un logement en « V » dans la roue à secteur denté.

Également, l'exemple décrit ci-avant se rapporte à une vanne à soupape et à dispositif de transformation des mouvements de rotation d'un organe de commande en va-et-vient de la soupape.

Enfin, dans l'exemple décrit, le logement est formé par une came, laquelle est fixée à un corps de vanne formant le bâti fixe de la came. En variante, le logement peut être réalisé dans tout bâti de la vanne, fixe par rapport à l'obturateur et/ou à l'élément commandant le déplacement de l'obturateur dans la vanne.

## Revendications

1. Vanne, notamment vanne pour véhicule automobile telle qu'une vanne de recirculation des gaz d'échappement, comprenant un organe de commande (14), monté rotatif par rapport à un bâti fixe (20) de la vanne, la rotation de l'organe de commande (14) commandant l'ouverture de la vanne, un roulement comprenant deux bagues (30a ; 30b) libres en rotation l'une par rapport à l'autre (30) étant monté entre le bâti fixe (20) de la vanne et l'organe de commande (14), le bâti fixe (20) formant un logement (50) de réception du roulement (30) avec un fond (52) et une paroi latérale (54) s'étendant essentiellement selon l'axe (A) de rotation de l'organe de commande (14), le bâti fixe comprenant une came (20) à chemin de came (22), destinée à transformer le mouvement de rotation de l'organe de commande (14) en translation d'une soupape de la vanne par rapport à un siège de vanne, la came (20) formant de préférence le logement de réception du roulement (30), **caractérisée en ce que** le logement comporte un bord rabattu (56) de la paroi latérale (54) sur au moins deux secteurs angulaires disjoints symétriques sur une bague du roulement pour limiter, avec le fond du logement (52), les mouvement de ladite bague selon l'axe (A) de rotation de l'organe de commande (14).

2. Vanne selon la revendication 1, dans laquelle le roulement est un roulement à billes ou à rouleaux.

3. Vanne selon l'une quelconque des revendications précédentes, dans laquelle l'organe de commande (14) est solidaire en rotation d'un volet d'obturation d'un passage dans la vanne.

4. Vanne selon l'une des revendications précédentes, dans laquelle l'organe de commande, est une roue à secteur denté (14) tournant à l'encontre de l'action d'un ressort de rappel (16) agissant en torsion.

5. Vanne selon la revendication 4, dans laquelle le ressort de rappel (16) comprend un premier élément de liaison, par exemple un crochet (48) ouvert dans la direction circonférentielle par rapport à la roue à secteur denté (14), adapté à coopérer avec un deuxième élément de liaison de la roue à secteur denté (14), par exemple une surface d'appui (40) de la roue à secteur denté (14), les premier (48) et deuxième (40) éléments de liaison étant conformés pour pouvoir relier ensemble le ressort de rappel (16) et la roue à secteur denté (14), par rotation de la roue à secteur denté (14) par rapport au ressort de rappel (16) depuis une position où le ressort de rappel (48) et la roue à secteur denté (14) sont fonctionnellement indépendants.

6. Vanne selon la revendication 5, dans laquelle la roue à secteur denté (14) comporte, à l'extrémité radialement externe de la surface d'appui (40), une projection (42) s'étendant dans la direction de l'axe de rotation (A) de la roue à secteur denté (14) et/ou dans une direction orthoradiale par rapport à la roue à secteur denté (14).

7. Procédé de fabrication d'une vanne selon l'une quelconque des revendications précédentes, comprenant les étapes consistant à :
a) assembler le roulement (30) le logement (50) prévu à cet effet dans le bâti fixe (20),
b) rabattre sur les secteurs angulaires la paroi latérale (54) du logement (50) sur une bague (30a) du roulement (30), par exemple par galetage, pour limiter avec le fond du logement (52), les mouvements de ladite bague (30a) selon l'axe de (A) de rotation de l'organe de commande (14).

8. Procédé selon la revendication 7, l'organe de commande est une roue à secteur denté (14), comprenant au moins un renfoncement radial, de préférence au moins deux renfoncements radiaux, de préférence encore deux renfoncements radiaux symétriques, dans lequel :
- à l'étape a), la roue à secteur denté (14) est également assemblée avec le bâti fixe (20) et le roulement (30), et
- à l'étape b), on rabat la paroi latérale (54) sur les secteurs angulaires accessibles à travers le ou les renfoncements radiaux de la roue à secteur denté (14), au cours de rotations de la roue à secteur denté (14), le cas échéant.

## Patentansprüche

1. Ventil, insbesondere Ventil für ein Kraftfahrzeug wie etwa ein Abgasrückführungsventil, welches ein Steuerelement (14) umfasst, das drehbar in Bezug auf ein festes Unterteil (20) des Ventils gelagert ist, wobei die Drehung des Steuerelements (14) das Öffnen des Ventils steuert, wobei ein zwei relativ zueinander frei drehbare Ringe (30a; 30b) umfassendes Wälzlager (30) zwischen dem festen Unterteil (20) des Ventils und dem Steuerelement (14) angebracht ist, wobei das feste Unterteil (20) einen Aufnahmeraum (50) zur Aufnahme des Wälzlagers (30) mit einem Boden (52) und einer Seitenwand (54), die sich im Wesentlichen entlang der Drehachse (A) des Steuerelements (14) erstreckt, bildet, wobei das feste Unterteil einen Nocken (20) mit einer Nockenbahn (22) umfasst, der dazu bestimmt ist, die Drehbewegung des Steuerelements (14) in eine Translation eines Ventilelements des Ventils in Bezug auf einen Ventilsitz umzuwandeln, wobei der Nocken (20) vorzugsweise den Aufnahmeraum zur Aufnahme des Wälzlagers (30) bildet, **dadurch gekennzeichnet, dass** der Aufnahmeraum einen auf einen Ring des Wälzlagers umgelegten Rand (56) der Seitenwand (54) auf wenigstens zwei, disjunkten, symmetrischen Winkelsektoren aufweist, um mit dem Boden (52) des Aufnahmeraumes die Bewegungen des Ringes entlang der Drehachse (A) des Steuerelements (14) zu begrenzen.

2. Ventil nach Anspruch 1, wobei das Wälzlager ein Kugellager oder ein Rollenlager ist.

3. Ventil nach einem der vorhergehenden Ansprüche, wobei das Steuerelement (14) mit einer Verschlussklappe eines Durchgangs in dem Ventil drehfest verbunden ist.

4. Ventil nach einem der vorhergehenden Ansprüche, wobei das Steuerelement ein Sektorzahnrad (14) ist, das sich entgegen der Wirkung einer Rückholfeder (16) mit Torsionswirkung dreht.

5. Ventil nach Anspruch 4, wobei die Rückholfeder (16) ein erstes Verbindungselement umfasst, zum Beispiel einen in der Umfangsrichtung in Bezug auf das Sektorzahnrad (14) offenen Haken (48), das dafür ausgelegt ist, mit einem zweiten Verbindungselement des Sektorzahnrades (14), zum Beispiel einer Anlagefläche (40) des Sektorzahnrades (14), zusammenzuwirken, wobei das erste (48) und zweite (40) Verbindungselement so ausgebildet sind, dass sie die Rückholfeder (16) und das Sektorzahnrad (14) durch Drehung des Sektorzahnrades (14) in Bezug auf die Rückholfeder (16) aus einer Position, in der die Rückholfeder (48) und das Sektorzahnrad (14) funktional unabhängig sind, miteinander verbinden können.

6. Ventil nach Anspruch 5, wobei das Sektorzahnrad (14) am radial äußeren Ende der Anlagefläche (40) einen Vorsprung (42) aufweist, der sich in der Richtung der Drehachse (A) des Sektorzahnrades (14) und/oder in einer in Bezug auf das Sektorzahnrad (14) orthoradialen Richtung erstreckt.

7. Verfahren zur Herstellung eines Ventils nach einem der vorhergehenden Ansprüche, welches die folgenden Schritte umfasst:
a) Einbauen des Wälzlagers (30) in den Aufnahmeraum (50), der zu diesem Zweck in dem Unterteil (20) vorgesehen ist,
b) Umlegen, auf den Winkelsektoren, der Seitenwand (54) des Aufnahmeraumes (50) auf einen Ring (30a) des Wälzlagers (30), zum Beispiel durch Glattwalzen, um mit dem Boden (52) des Aufnahmeraumes die Bewegungen des Ringes (30a) entlang der Drehachse (A) des Steuerelements (14) zu begrenzen.

8. Verfahren nach Anspruch 7, wobei das Steuerelement ein Sektorzahnrad (14) ist, welches wenigstens eine radiale Vertiefung umfasst, vorzugsweise wenigstens zwei radiale Vertiefungen, noch stärker bevorzugt zwei symmetrische radiale Vertiefungen, wobei:
- in Schritt a) das Sektorzahnrad (14) auch mit dem festen Unterteil (20) und dem Wälzlager (30) zusammengebaut wird,
- in Schritt b) die Seitenwand (54) auf die Winkelsektoren umgelegt wird, die durch die radiale(n) Vertiefung(en) des Sektorzahnrades (14) hindurch zugänglich sind, gegebenenfalls während Drehungen des Sektorzahnrades (14).

## Claims

1. Valve, in particular valve for a motor vehicle such as an exhaust-gas recirculation valve, comprising a control member (14) mounted rotatably with respect to a fixed frame (20) of the valve, the rotation of the control member (14) controlling the opening of the valve, a bearing comprising two rings (30a; 30b) free to rotate with respect to one another (30) being mounted between the fixed frame (20) of the valve and the control member (14), the fixed frame (20) forming a housing (50) for receiving the bearing (30) with a bottom (52) and a lateral wall (54) extending substantially along the axis (A) of rotation of the control member (14), the fixed frame comprising a cam (20) with a camway (22), said cam being intended to convert the rotational movement of the control member (14) into a translational movement of a valve member of the valve with respect to a valve seat, the cam (20) preferably forming the housing for receiving the bearing (30), **characterized in that** the housing comprises, over at least two symmetrical separate angular sectors, a folded edge (56) of the lateral wall (54) that is folded onto a ring of the bearing in order to limit, with the bottom of the housing (52), the movements of said ring about the axis (A) of rotation of the control member (14).

2. Valve according to Claim 1, in which the bearing is a ball bearing or roller bearing.

3. Valve according to either one of the preceding claims, in which the control member (14) is coupled in rotation with a flap for shutting off a passage in the valve.

4. Valve according to one of the preceding claims, in which the control member is a toothed-sector wheel (14) rotating counter to the action of a return spring (16) acting in torsion.

5. Valve according to Claim 4, in which the return spring (16) comprises a first connection element, for example a hook (48) open in the circumferential direction with respect to the toothed-sector wheel (14), adapted to cooperate with a second connection element of the toothed-sector wheel (14), for example a bearing surface (40) of the toothed-sector wheel (14), the first (48) and second (40) connection elements being configured to be able to connect together the return spring (16) and the toothed-sector wheel (14), by rotation of the toothed-sector wheel (14) with respect to the return spring (16) from a position in which the return spring (48) and the toothed-sector wheel (14) are functionally independent.

6. Valve according to Claim 5, in which the toothed-sector wheel (14) comprises, at the radially outer end of the bearing surface (40), a projection (42) extending in the direction of the axis of rotation (A) of the toothed-sector wheel (14) and/or in an orthoradial direction with respect to the toothed-sector wheel (14).

7. Method for manufacturing a valve according to any one of the preceding claims, comprising the steps consisting in:
a) assembling the bearing (30) with the housing (50) provided for this purpose in the fixed frame (20),
b) folding, over the angular sectors, the lateral wall (54) of the housing (50) onto a ring (30a) of the bearing (30), for example by rollering, in order to limit, with the bottom of the housing (52), the movements of said ring (30a) about the axis (A) of rotation of the control member (14).

8. Method according to Claim 7, with the control member being a toothed-sector wheel (14) comprising at least one radial recess, preferably at least two radial recesses, preferably still two radially symmetrical recesses, in which:
- in step a), the toothed-sector wheel (14) is also assembled with the fixed frame (20) and the bearing (30), and
- in step b), the lateral wall (54) is folded over the accessible angular sectors through the radial recess or recesses of the toothed-sector wheel (14), during rotations of the toothed-sector wheel (14), where appropriate.
